# EUROPEAN PATENT APPLICATION

(11) **EP 0 736 854 A1**
(43) Date of publication of application: **09.10.1996**
(21) Application number: 96302489.8
(22) Date of filing: 09.04.1996
(51) Int. Cl.: G09F 3/02

(54) **Product label**

(30) Priority: 06.04.1995 GB 9507117
(71) Applicant: SAFEWAY STORES, PLC., Hayes, Middlesex UB3 4AY (GB)
(72) Inventor: Mckinty, Alan Roderick, Portsmouth, Hampshire, PO2 OBU (GB)
(74) Representative: W.P. Thompson & Co.

(57) **Abstract**

A self-adhesive product label (10) is printed with a code 128 bar code (12) and an EAN bar code (14). The code 128 bar code (12) is adapted to be read by hand-held scanners and includes information concerning the price indicated on the label. The EAN bar code (14) can be read by a conventional scanner but not by the hand-held scanner.

When it is desired to reduce the price of a product the label (10) with two bar codes is printed. A hand-held scanner will read the code 128 bar code (12) (including the reduced price). In contrast, if the product is scanned conventionally with a static scanner by an assistant it will only respond to the EAN bar code (14), thereby alerting an assistant to the fact that the product is to be sold at a reduced price. The label also preferably carries the reduced price (18).

## Description

The present invention relates to product labels, and in particular, but not exclusively, to product labels which can be read by means of a bar code scanner.

It is now common practice for many products to be printed or labelled with an identifying bar code. Such products can quickly and accurately be identified at a store checkout by means of a laser reader. Such a reader scans the bar code on a product with a laser beam and detects the reflected signal which is in the form of a code corresponding to the bar code. The detector is connected to a computer which stores information concerning the price and identity of the product. The price and the identity of the product are normally printed on a receipt and the price is used to calculate the total value of goods passing through the checkout. The apparatus can also be used to keep a check on the stock of each product and, if desired, automatically trigger re-ordering of that product when the supplies fall to a predetermined level.

In the majority of stores which use such arrangements, the scanners are provided at a checkout area and the products purchased by a customer are passed over the bar code reader by an assistant. Although this arrangement greatly reduces the time involved in passing through the checkout it is generally no less convenient for a shopper since it is still necessary for the shopper to unload a trolley or basket, place the products on a conveyor belt and then re-load the products into the trolley or basket after they have passed through the checkout.

Thus, in a recent development selected customers have been permitted to scan their own products themselves. In such an arrangement a shopper identifies himself or herself by means of a pass card and is issued with a hand-held laser scanner. The shopper then selects the desired products from the shelves and before placing the products in a trolley scans the bar code printed thereon. The identity of the product is stored in the hand-held scanner and, optionally, the price of the scanned product and the running total of products selected can be displayed. Once the customer has selected the required goods, the scanner is plugged into its base station whereupon the identity of the products selected is automatically downloaded into a computer and a printer is arranged to issue a ticket having a bar code which identifies the shopper in question. The shopper then approaches a conventional checkout whereupon an assistant scans the bar code on the printed ticket which causes the computer to access the information downloaded from the hand-held scanner resulting in the printing of a conventional receipt identifying each product and the price thereof and the total amount payable. The shopper can then pay for the products purchased. In this way, it is not necessary for a shopper to unload and reload a trolley, which is much more convenient and also saves a great deal of time at the checkout.

Shoppers who are not issued with a hand-held scanner are still able to shop in the conventional way, whereupon each product is scanned individually by an assistant at the checkout.

The above arrangement works very well in most cases. However, a problem arises where it is necessary to override the normal bar code printed on a product. This might occur, for example, where a particular product has been reduced in price (for example because it is nearing its "best before" date) but where the computer has not been updated with the new price because most of the products bearing the same bar code are on sale at a different price.

In such cases, it is necessary to apply a label over the normal bar code, the label being printed with a new bar code having additional information, including details of the lower price to be charged for that particular item. This does not present a problem to most hand-held scanners, since these are arranged to be able to read both the conventional bar code (typically a EAN 8 or EAN 13 bar code) and the new bar code on the label having the additional information (typically a code 128 bar code). However, a problem arises with shoppers who are not issued with a hand-held scanner since the conventional scanners at checkouts are only able to read EAN 8 or EAN 13 bar codes and not code 128 bar codes with the additional information. Obviously, the normal bar code printed on the product must be completely obscured by the label to prevent the product from being identified as a product to be sold at the normal price.

It is thus an object of the present invention to provide a product label which may be read by a hand-held scanner to provide information concerning the price indicated on the label and also which can be read by a conventional scanner in order to alert an assistant that the product is being offered at a reduced price.

In accordance with the present invention a product label comprises first and second bar codes, the two bar codes being of different formats and each bar code being adapted to be read by a respective scanner.

Preferably the bar codes are of different bar code types.

In a preferred embodiment, the bar codes are aligned perpendicularly to one another in order to save space. The label should also preferably be self-adhesive, so that it can easily be applied to a product to obscure an existing bar code.

In one embodiment, one bar code comprises information which includes the price to be charged for that product and the other bar code when scanned is adapted to alert an assistant to the fact that the product is being offered at a lower price. For example, the first bar code may be a code 128 bar code and the second bar code may be a EAN bar code. In this way, the first bar code can be scanned by a hand-held scanner and the information stored therein for subsequent downloading to the main computer at the checkout, whereas the second bar code can be scanned by a conventional, fixed scanner at the checkout by an assistant and will, for example, alert the assistant to the fact that a lower price is to be charged. Preferably, the lower price is also indicated on the ticket so that the assistant can record the correct amount.

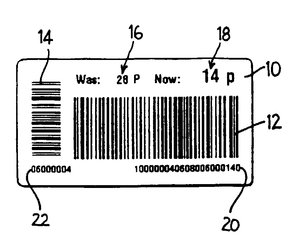

By way of example only, a specific embodiment of the present invention will now be described with reference to the accompanying drawing which is an illustration of an embodiment of product label in accordance with the present invention.

In the Figure, the label 10 is in the form of a self-adhesive rectangular paper label and is printed with a first bar code 12 which extends in the longitudinal direction of the label and a second bar code 14 located at one end of the first bar code 12 and extending in the transverse direction of the label 10. The label is also printed with further non-machine readable information such as details of the previous price 16 and details of a new price 18.

The first bar code 12 is a code 128 bar code and includes a reason code which identifies why the product has been reduced in price, an original bar code which identifies the product and a price code which indicates the price to be charged for that product. This information is also printed in numerical form 20 beneath the bar code 12.

The second bar code 14 is an EAN 8 bar code and, in contrast to the first bar code 12 merely identifies that the product is a reduced-price product. A numerical equivalent 22 of the bar code 14 is also printed beneath the bar code 14.

When it is desired to reduce the price of a product a label 10 is printed by a conventional label printer having the information as indicated in the Figure. For a person using a hand-held scanner the scanner will read the bar code 12 which will identify why the price of the product was reduced, will identify the product itself and will indicate the price to be charged for that particular product. This information is then stored in the scanner for subsequent downloading to the store computer. The hand-held scanner will not read the conventional bar code since the label 10 is placed over the conventional bar code. Also, although the hand-held scanner is arranged to read EAN codes, which normally form the conventional bar codes printed on a product, the hand-held scanner is arranged not to respond to the reading of the second bar code 14.

For shoppers who are not issued with a hand-held scanner, when the product is scanned by an assistant at the checkout the scanner, which cannot read code 128 bar codes, will not respond to the bar code 12 but will respond to the bar code 14 by alerting the assistant to the fact that the product is to be sold at a reduced price. The assistant can then either peel off the label, scan the product conventionally and ensure that a lower price is charged or can manually enter the code 22 and also insert the lower price 18.

In this way, the label 10 can be used both by shoppers using hand-held scanners and shoppers shopping in the conventional manner.

## Claims

1. A product label (10) comprising first (12) and second (14) bar codes, the two bar codes being of different formats and each bar code being adapted to be read by a respective scanner.

2. A product label as claimed in claim 1, wherein the bar codes are aligned substantially perpendicularly to one another.

3. A product label as claimed in claim 2, wherein the label is generally rectangular, one (12) of the bar codes being aligned with the longitudinal direction of the label and the other (14) of the bar codes being aligned with the transverse direction of the label.

4. A product label as claimed in any of the preceding claims, wherein the label (10) is self-adhesive.

5. A product label as claimed in any of the preceding claims, wherein one bar code (12) comprises information which includes the price to be charged for that product.

6. A product label as claimed in any of the preceding claims, in which one bar code (14) when scanned is adapted to indicate that the product is being offered at a lower price.

7. A product label as claimed in any of the preceding claims, wherein the first bar code (12) is a code 128 bar code.

8. A product label as claimed in any of the preceding claims, wherein the second bar code (14) is an EAN bar code.

9. A product label as claimed in any of the preceding claims, wherein the product label is also printed with non-machine readable information (16, 18, 20, 22).

10. A product label as claimed in claim 9, wherein the non-machine readable information comprises a numerical equivalent of a bar code.

11. A product label as claimed in claim 9 or claim 10, wherein the non-machine readable information comprises a price of the product.
